# EUROPEAN PATENT APPLICATION

(11) **EP 1 271 969 A2**
(43) Date of publication of application: **02.01.2003**
(21) Application number: 02013719.6
(22) Date of filing: 20.06.2002
(51) Int. Cl.: H04Q 3/00

(54) **Signaling gateway system and network management method**

(30) Priority: 20.06.2001 JP 2001185702
(71) Applicant: NEC CORPORATION, Tokyo (JP)
(72) Inventor: Karasaki, Kazuhiko, NEC Corporation, Tokyo (JP)
(74) Representative: Glawe. Delfs. Moll

(57) **Abstract**

Each signaling gateway is provided to perform a transport layer control for transferring a signaling message, a signaling message routing between a link on circuits (using a routing table) and an association as well as a stream, and a transport protocol conversion for transferring the signaling message. A network management server performs a centralized network management of signaling links received in the signaling gateways, as well as a setting and management of routing tables of the signaling gateways.

## Description

### BACKGROUND OF THE INVENTION:

The present invention relates to a signaling gateway system and a network management method for use in the signaling gateway system. In particular, this invention relates to a network management method for use in distributed signaling gateways.

An existing signaling gateway systems comprises a plurality of gateways which are connected and distributed between a signal network of a telephone network and an Internet protocol network.

Each of the signaling gateways carries out a network management control to realize an inter-working of a signaling message between the signal network and an application server on the Internet protocol network. In this way, each network management unit is limited to within a range of a line or circuit (of the signal network) received in each signaling gateway, while each signaling gateway has its quality maintained within its exactly realizable range.

Accordingly, since a network management can be carried out only within the range of the circuit received in each signaling gateway, it is difficult to avoid a waste of address resources for the signal network, and it is impossible to perform a change-over/back control extending to the signaling gateways.

For this reason, it is difficult to ensure a high reliability for a system including a plurality of signaling gateways. And, if it is desired to ensure a high reliability for each signaling gateway, there will be an increase in equipment cost covering all these (a large number of) signaling gateways, hence causing an increase in the total cost for the entire system.

In order to solve the aforesaid problem associated with the above-described conventional signaling gateway system, an improved method has been suggested which requires that a network management between the signal network and the Internet protocol is carried out by the application server. However, since the application server is required to execute the network management and to control each signaling gateway, such an application server has only a low calling capability.

### SUMMARY OF THE INVENTION:

It is an object of the present invention to solve the above problems by providing an improved signaling gateway system as well as an improved network management method for use in the improved signaling gateway system, so as to prevent a decrease in the calling capability of each application server, to avoid a waste of address resources for a signal network, and to perform a desired change-over/back control.

Therefore, a signaling gateway system according to the present invention is provided for realizing an inter-working of signaling message between a signal network of a telephone network and an application server of an Internet protocol network. In particular, this signaling gateway system comprises a plurality of signaling gateways connected and distributed between the signal network and the Internet protocol network for transferring the signaling message between the signal network and the Internet protocol network. A network management server connected to the signaling gateways for performing a centralized network management between the signal network and the Internet protocol network.

Further, a network management method according to an another aspect of the present invention is provided for use in a signaling gateway system realizing an inter-working of a signaling message between a signal network of a telephone network and an application server of an Internet protocol network. In particular, this network management method comprises using a plurality of signaling gateways connected and distributed between the signal network and the Internet protocol network to transfer a signaling message between the signal network and the Internet protocol; and using a network management server connected to the signaling gateways to perform a centralized network management between the signal network and the Internet protocol network.

### BRIEF DESCRIPTION OF THE DRAWINGS:

Fig. 1 is a block diagram showing a signaling gateway system formed according to a preferred embodiment of the present invention.
Fig. 2 is a block diagram showing a signaling gateway used in the signaling gateway system of Fig. 1.
Fig. 3 is a block diagram showing a network management server used in the signaling gateway system of Fig. 1.
Fig. 4 is a flowchart for describing an operation of the network management server of Fig. 3.
Fig. 5 is a flowchart for describing an operation of the signaling gateway of Fig. 2.

### DESCRIPTION OF THE PREFERRED EMBODIMENT:

A preferred embodiment of the present invention will be described in the following with reference to the accompanying drawings.

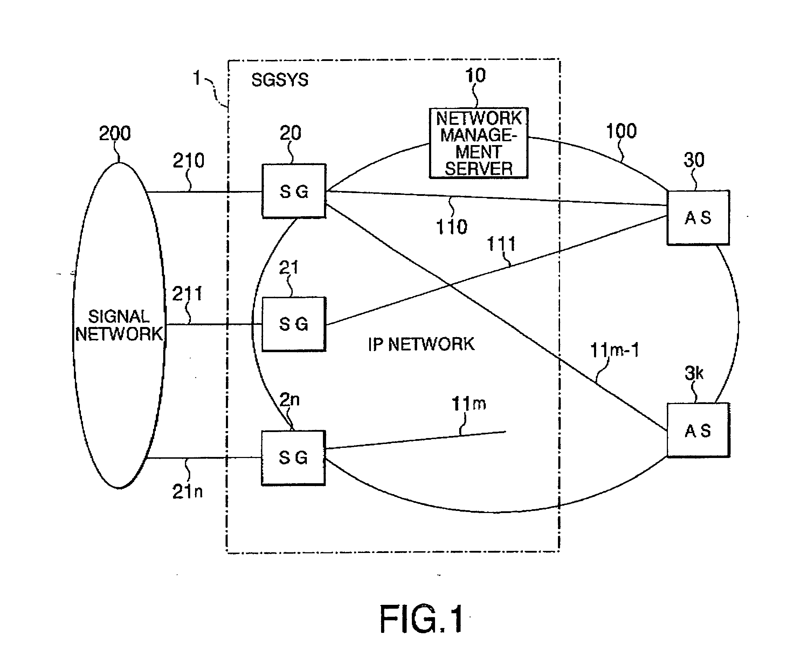

Fig. 1 is a block diagram showing a signaling gateway system formed according to the preferred embodiment of the invention. As shown in Fig. 1, a signaling gateway system (SGSYS) 1 comprises a network management server 10 located on an Internet protocol (IP) network 100, and a plurality of signaling gateways (SG) 20 to 2n connected and distributed between the IP network 100 and a signaling network 200. The network management server 10 is connected to the signaling gateways 20 to 2n through the IP network 100 or control lines (not shown), In fact, such a signaling gateway system is disposed between the signal network [SS7 (Signaling System No. 7: common line signaling manner) network] 200 and a plurality of application servers (AS) 30 to 3k disposed on the IP network 100. Here, the signal network 200 is provided to transfer signaling messages within a telephone network, while the application servers 30 to 3k are provided such that a signaling message can be terminated on the IP network 100 so as to realize an application processing such as calling. In this way, it is possible to realize an inter-working of signaling messages between the signal network 200 on one hand and the application servers 30 to 3k on the other.

However, although an actual network (of the IP network 100) also includes a network device (not shown) such as a router which is disposed between the application servers 30 to 3K on one hand and the signaling gateway system 1 on the other, such a network device and its installation will not be described in the present specification since they are well known in the art and are not directly related to the present invention.

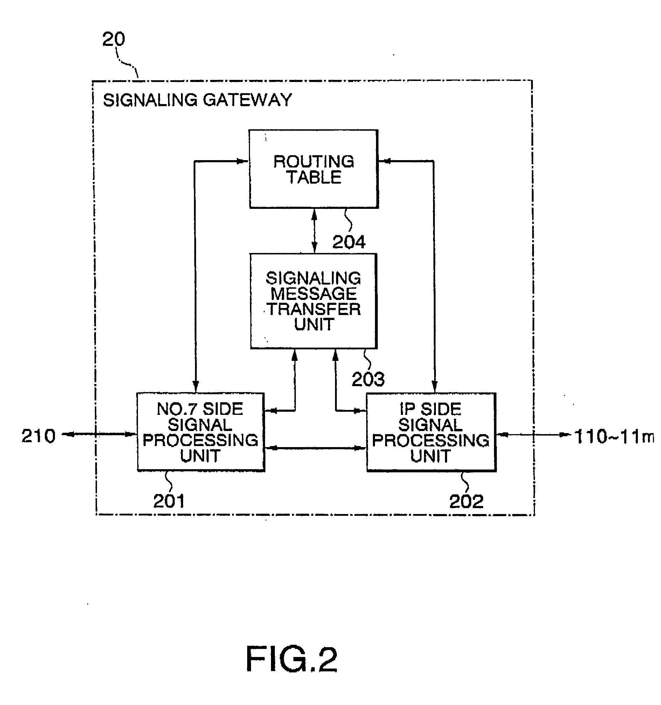

Fig. 2 is a block diagram showing in detail the signaling gateway 20 illustrated in Fig. 1. As shown in Fig. 2, the signaling gateway 20 comprises No. 7 side signal processing unit 201, an IP side signal processing unit 202, a signaling message transfer unit 203, and a routing table 204 for storing routing information. Although not shown in the accompanying drawings, each of the signaling gateways 21 to 2n has the same construction as that of the signaling gateway 20.

The No. 7 side signal processing unit 201 and the IP side signal processing unit 202 of the signaling gateway 20, respectively receive i) signaling link on a line or circuit 210 in connection with the signal network 200 and ii) associations 110 to 11m indicating a logical connection with the application servers 30 to 3k and streams which are data transfer units on the associations 110 to 11m.

The signaling message transfer unit 203 is provided to perform a transport layer control for transferring a signaling message, a signaling message routing between the link of circuits 210 to 21n (using a routing table 204) on one hand and the associations 110 to 11m as well as the above stream on the other, and a transport protocol conversion for transferring signaling message. In this way, it is not necessary for the signaling gateways 20 to 2n to perform a network management, and the aforementioned functions can be specified, thereby making it possible to improve a transfer capability.

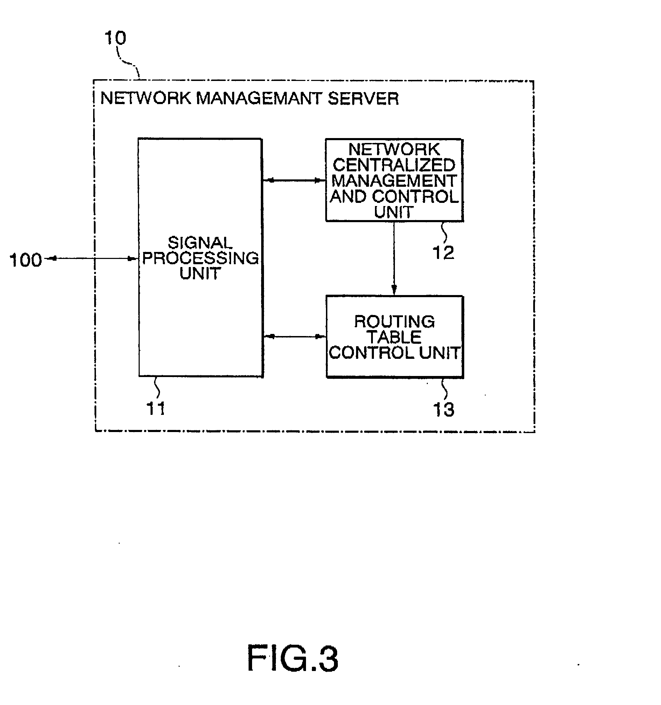

Fig. 3 is a block diagram showing a network management server 10 illustrated in Fig. 1. As shown in Fig. 3, the network management server 10 comprises a signal processing unit 11, a network centralized management and control unit 12, and a routing table control unit 13 for setting and controlling the routing information stored in the routing table 204.

The network centralized management and control unit 12 of the network management server 10 performs a network centralized management and control of the signaling link received in the signaling gateways 20 to 2n. In other words, the network management server 10 controls transferring the signaling message between the signal network 100 and application servers 30 to 3k on the IP network 200. The network management server 10 performs the network centralized management without cooperation of the application servers 30 to 3k. That is, the application servers 30 to 3k does not have network management functions specified in the signal network in this embodiment. The routing table control unit 13 operates, in accordance with the network management results of the network centralized management and control unit 12, to perform setting and management of the routing information stored in each routing table 204 of the signaling gateways 20 to 2n, so as to realize a routing between the link (on the circuits 210 to 21n through the signaling gateways 20 to 2n) and the associations 110 to 11n as well as the stream. In this way, by virtue of the above devices and by performing a complete designing of network interface, it is possible for the network management server 10 to provide a high reliability, thereby ensuring an improved network management function.

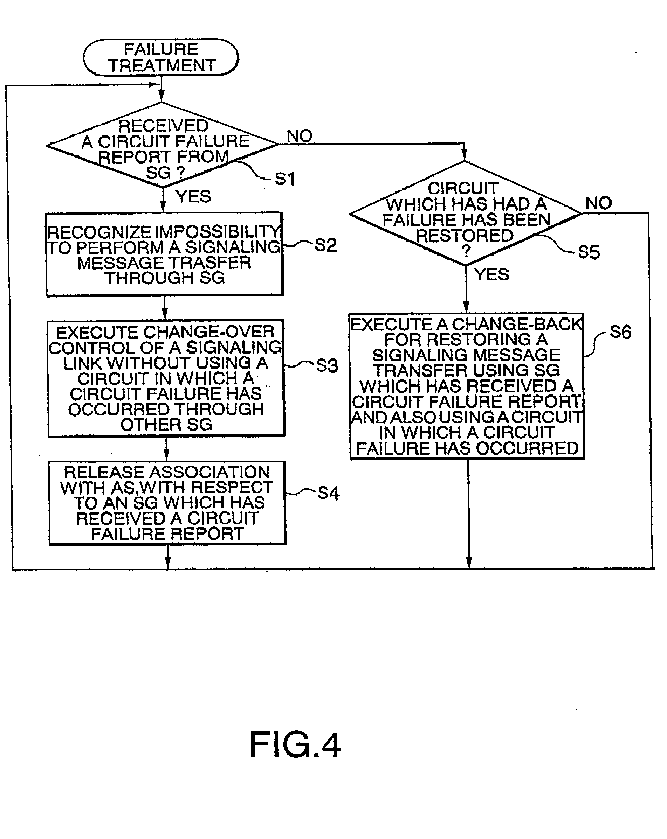

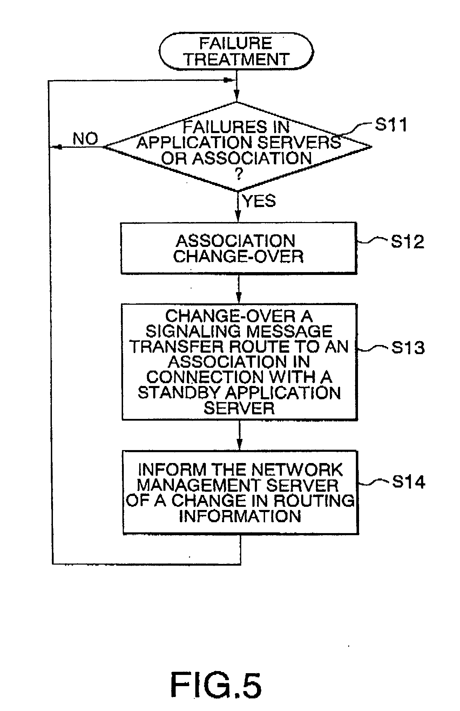

Fig. 4 is a flowchart for describing an operation of the network management server 10 illustrated in Fig. 1. Fig. 5 is another flowchart for describing an operation of the signaling gateways 20 to 2n illustrated in Fig. 1. In the following, an operation of the signaling gateway system 1 according to the preferred embodiment of the present invention will be described with reference to Figs. 1 to 5.

If a failure occurs in the circuit 210 received by the gateway 20, the gateway 20 detects the failure and produces a circuit failure report to inform the network management server 10 about occurrence of the failure on the circuit 210. The network management server 10 is provided such that when the circuit 210 received in the signaling gateway 20 has the failure (step S1 shown in Fig. 4), this network management server 10 operates, in accordance with the circuit failure report from the signaling gateway 20, to recognize a fact that a signaling massage transfer (through the application server 30, the association 110, the signaling gateway 20 and the circuit 210) has already been impossible (step S2 shown in Fig. 4).

Further, the network management server 10 does not use the circuit 210 with respect to the signal network 200 through the signaling gateway 20, but carries out a signaling link change-over control prescribed by a signal message transfer control, in which a signaling message is transferred in detour to the circuit 211 received in the signaling gateway 21 which has established the application server 30 and a spare association 111 (step S3 shown in Fig. 4).

At this time, the network management server 10, by releasing the association 110 in connection with the application server 30 with respect to the signaling gateway 20, operates to indicate that the signaling gateway 20 has become unable to communicate with the signal network 200 (with respect to the application server 30), and that a communication is performed with the signal network 200 by employing a spare association 111 and the signaling gateway SG 21 (step 4 shown in Fig. 4).

Further, at this time, the signaling message to the signal network 200 received and buffered by the signaling gateway 20 is transferred to the signal network 200, by way of the IP network 100 and through the signaling gateway 21, thereby preventing a message loss which is often associated with the change-over operation.

In fact, the network management server 10 is provided such that as soon as the circuit 210 is restored (step S5 shown in Fig. 4), this network management server 10 performs the change-back operation for restoring signaling message transfer using the signaling gateway 20, the circuit 210 and the association 110 (step S6 shown in Fig. 4).

The signaling gateways 20 to 2n operate in a manner such that as soon as failures occur in the application servers 30 to 3k or the associations 110 to 11m (step S11 shown in Fig. 5), these signaling gateways perform an association change-over (step S12 shown in Fig. 5).

At this time, as shown in Fig. 1, if the application server 30 is an active (ACT) server of the signaling gateway 20 and the application server 3k is a standby (SBY) server, once a failure of the application server 30 is recognized by the signaling gateway 20 in accordance with an association failure, the signaling gateway 20 operates to change a signaling message transfer route to the association 11m-1 in connection with the application server 3k, thereby ensuring the continuation of the service (step S13 shown in Fig. 5). Further, the signaling gateway 20 will inform the network management server 10 of a change in the routing information (step 14 shown in Fig. 5).

According to this embodiment, the signaling gateway system 1 can be established which realizes an inter-working of signaling message between the signal network 200 of the telephone network and the application servers 30 to 3k of the IP network 100. Further, a signaling message transfer function acting between the signal network 200 and the IP network 100 can be assigned to the distributed signaling gateways 20 to 2n. In addition, a network management/control function of the signal network 200 received in the distributed signaling gateways 20 to 2n can be assigned to the network management server 10 having a high reliability. As a result, it is possible to obtain an improved reliability for the network management of the entire signaling gateway system 1.

Furthermore, by executing the centralized network management in the signaling gateway system 1, when failures occur in the respective signaling gateways 20 to 2n, it is possible to perform the change-over/back control extending the signaling gateways 20 to 2n, using the network management server 10. In this way, it is possible to obtain an improved reliability in dealing with failures occurring in the links of the respective signaling gateways 20 to 2n and the signal network 200.

Besides, in the signaling gateway system 1, by virtue of a connection among the signaling gateways 20 to 2n and through the IP network 100 which is mainly controlled by the network management server 10, it is possible to perform a control for preventing a message loss at the time of change-over, and to support functions which could not be supported when the signaling gateways 20 to 2n are set independent from one another.

Further, since the signaling gateways 20 to 2n are released from the network management, it is possible for them to be specified in the signaling message transfer and thus increase the transfer ability. As a result, it becomes possible to effectively use the circuits 210 to 21 n in connection with the signal network 200.

In this way, since it is possible to flexibly deal with the network management function of the network management server 10 as well as the functions of the signaling gateways 20 to 2n, it has become possible to effectively use the address source of the signal network 200. Moreover, since the network management function specified in the signal network 200 is released from the application servers 30 to 3k, it is possible to increase the ability of the application servers 30 to 3k.

## Claims

1. A signaling gateway system realizing an inter-working of a signaling message between a signal network of a telephone network and an application server of an Internet protocol network, said signaling gateway system comprising:
a plurality of signaling gateways connected and distributed between said signal network and said Internet protocol network for transferring said signaling message between said signal network and said application server; and
a network management server connected to said signaling gateways for performing a centralized network management between said signal network and said Internet protocol network.

2. A signaling gateway system as claimed in claim 1, wherein each of said gateways comprises a routing table for storing routing information,
said network management server comprising a routing table control unit for controlling said routing table.

3. A signaling gateway system as claimed in claim 1, wherein said network management server is formed in a manner such that when any one of said signaling gateways detects a failure, said network management server performs a change-over control from the signaling gateway which detects said failure to another one of said signaling gateways.

4. A signaling gateway system as claimed in claim 3, wherein said network management server is further formed in a manner such that when the signaling gateway which detects said failure further detects restoration from said failure, said network management server performs a change-back control from the other one of signaling gateways to the signaling gateway which detects restoration.

5. A signaling gateway system as claimed in claim 3, wherein said network management server is formed so as to transfer said signaling message received by the signaling gateway which detects said failure to the other signaling gateway through said Internet protocol network.

6. A signaling gateway system as claimed in claim 1, wherein said network management server is formed so as to performs said centralized network management without cooperation of the application servers.

7. A network management method for use in a signaling gateway system realizing an inter-working of a signaling message between a signal network of a telephone network and an application server of an Internet protocol network, said network management method comprising the steps of:
using a plurality of signaling gateways connected and distributed between said signal network and said Internet protocol network to transfer a signaling message between said signal network and said Internet protocol network; and
using a network management server connected to said signaling gateways to perform a centralized network management between said signal network and said Internet Protocol network .

8. A network management method as claimed in claim 7, wherein the using step of said network management server comprises a step which is carried out at the time any one of said signaling gateways detects a failure, to perform a change-over control from the signaling gateway which detects said failure to another one of said signaling gateways.

9. A network management method as claimed in claim 8, wherein the using step of said network management server further comprises a step of transferring said signaling message received by the signaling gateway which detects said failure to the other signaling gateway through said Internet protocol network.

10. A network management method as claimed in claim 7, wherein the using step of said network management server are performed without cooperation of the application servers.
